(19) Europäisches Patentamt
European Patent Office
Office européen des brevets

(11) Veröffentlichungsnummer: **0 240 887 B1**

(12) **EUROPÄISCHE PATENTSCHRIFT**

(45) Veröffentlichungstag der Patentschrift: **11.11.92**

(51) Int. Cl.$^5$: **C08L 77/00**, C08K 5/13, C08K 5/37, C08K 5/41

(21) Anmeldenummer: **87104658.7**

(22) Anmeldetag: **30.03.87**

(54) **Fliessfähige Formmassen auf Polyamidbasis.**

(30) Priorität: **11.04.86 DE 3612159**

(43) Veröffentlichungstag der Anmeldung:
**14.10.87 Patentblatt 87/42**

(45) Bekanntmachung des Hinweises auf die Patenterteilung:
**11.11.92 Patentblatt 92/46**

(84) Benannte Vertragsstaaten:
**DE ES FR GB IT**

(56) Entgegenhaltungen:
**EP-A- 0 083 446**
**GB-A- 1 203 283**
**US-A- 2 374 576**

(73) Patentinhaber: **BAYER AG**
**W-5090 Leverkusen 1 Bayerwerk(DE)**

(72) Erfinder: **Meyer, Rolf-Volker, Dr.**
**Buchheimer Strasse 23**
**W-4150 Krefeld 1(DE)**
Erfinder: **Fahnler, Friedrich, Dipl.-Ing.**
**Wimmersweg 60**
**W-4150 Krefeld 1(DE)**
Erfinder: **Dhein, Rolf, Dr.**
**Deswatinesstrasse 30**
**W-4150 Krefeld 1(DE)**
Erfinder: **Wandel, Martin, Dr.**
**Donatusstrasse 17**
**W-4047 Dormagen 11(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 240 887 B1

## Beschreibung

Gegenstand der Erfindung sind thermoplastisch verarbeitbare, mit Dien- oder Acrylatkautschuken schlagzäh-modifizierte Formmassen auf Basis von Polyamiden, die spezielle Diphenole enthalten.

Das bekannte hochwertige Eigenschaftsniveau der thermoplastisch verarbeitbaren Polyamide hängt wesentlich von den zwischen verschiedenen Carbonamidgruppen wirksamen Wasserstoffbrücken ab. Auch die durch die Polarität der Carbonamidgruppen bedingte Hydrophilie hat darauf einen großen Einfluß, da sie eine deutlich meßbare Wasseraufnahme sowohl bei Wasserlagerung als auch im Normklima (s. z.B. Kunststoffhandbuch Band VI, Polyamide, Carl-Hanser-Verlag, München, 1966, S. 458 ff) verursacht.

So hängt z.B. die Schlagzähigkeit von Formkörpern aus Polyamiden erheblich vom Wassergehalt der Formkörper ab. Im wasserfreien Zustand, z.B. nach der Herstellung der Formkörper durch Spritzgießen, sind besonders die aus leicht fließenden und damit leicht verarbeitbaren Polyamiden mit mittleren Molekulargewichten hergestellten Formkörper relativ empfindlich gegen Schlagbeanspruchung. Dies gilt besonders für Formkörper aus teilkristallinen Polyamiden.

Durch das Konditionieren mit Wasser kann die Zähigkeit dieser Formkörper zwar deutlich verbessert werden. Es tritt jedoch parallel dazu eine Weichmachung der Produkte ein, die besonders deutlich durch eine drastische Verminderung der Steifigkeit, gemessen durch den E-Modul, zu beobachten ist.

Für viele Einsatzgebiete, z.B. für Werkzeuggehäuse, aber insbesondere auch für Funktions- und Karosserieteile im Automobilbereich ist das Zähigkeitsniveau nicht modifizierter Polyamide, insbesondere bei Temperaturen unterhalb Raumtemperatur nicht zufriedenstellend.

Um dies zu verbessern, wurde eine Vielzahl von Maßnahmen vorgeschlagen, so z.B. das Zumischen von bestimmten elastomeren Polymeren. So werden u.a. Polyethylene, Copolymerisate des Ethylens mit polaren Comonomeren wie Vinylacetat, (Meth)acrylsäure-(ester) als zähigkeitsverbessernde Zusätze vorgeschlagen oder geeignet modifizierte Kautschuke wie z.B. Copolymere aus Butadien und Acrylnitril.

In allen Fällen wird eine Verbesserung der Zähigkeit der Produkte erzielt. Je nach Typ und Menge der zur Zähigkeitsverbesserung zugefügten Komponenten wird jedoch gleichzeitig die Fließfähigkeit der Produkte verschlechtert und damit ihre Verarbeitbarkeit erschwert.

Dies gilt insbesondere für die Herstellung von großflächigen Formteilen, wie sie zunehmend im Automobilbau gewünscht werden, wie z.B. Karosserieteile, Spoiler, Stoßfänger, wo schon durch die Verarbeitungsprobleme Oberflächenstörungen an Fertigteilen auftreten können oder wegen der schlechten Fließfähigkeit z.B. von Legierungen aus Polyamiden und Kautschuk-Elastomeren die Formen häufig nur schwer überhaupt zu füllen sind.

Dies hat zur praktischen Konsequenz, daß zum Füllen von Werkzeugen, insbesondere für größerflächige Formteile, immer mehr Angußstellen benötigt werden, d.h. die Werkzeuge immer aufwendiger werden müssen und daß, bedingt auch durch die Angußstellen, unerwünschte Fließnähte auftreten, die die optischen und die mechanischen Gebrauchseigenschaften der Formteile beeinträchtigen können.

Es besteht daher ein Bedarf an Formmassen auf Basis von schlagzäh modifizierten Polyamiden mit guten technischen Gebrauchseigenschaften, die sich durch bessere Fließfähigkeit und damit verbesserte Verarbeitbarkeit und höhere Steifigkeit auszeichnen, d.h. die die oben genannten Nachteile nicht haben.

Überraschend wurde nunmehr gefunden, daß man die oben genannten Nachteile überwinden und insbesondere die Fließfähigkeit von Produkten zur Herstellung von Polyamid-Formmassen, die mit Dien- und/oder Acrylatkautschuken schlagzäh eingestellt sind dadurch drastisch verbessern kann, wenn man die Produkte mit speziellen Bisphenolen modifiziert.

Gegenstand der Erfindung sind daher thermoplastisch verarbeitbare Polyamid-Formmassen enthaltend Dien- und/oder Acrylatkautschuke dadurch gekennzeichnet, daß die Formmassen 3-40 Gew.-%, vorzugsweise 5-35 Gew.-%, besonders bevorzugt 10-30 Gew.-%, bezogen auf den Polyamidanteil, von Bisphenolen der allgemeinen Formel I enthalten

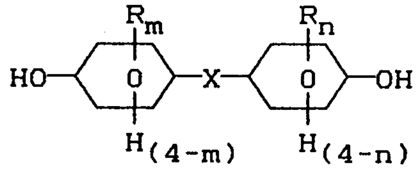

wobei

m und n unabhängig voneinander ganze Zahlen von 0-4 vorzugsweise 0, 1, 2 besonders bevorzugt 0,

bedeuten;

R für eine Methyl- und Ethylgruppe, vorzugsweise eine Methylgruppe, steht, mit der Maßgabe, daß die Summe der aliphatischen C-Atome aller an einem Phenolring gebundenen Rest R <6, vorzugsweise <3, ist,

X eine chemische Bindung oder einen bivalenten, aliphatischen $C_1$-$C_3$- oder $C_5$-$C_6$-Cycloalkylenrest O, S, SO, $SO_2$, CO bzw. $-O(CH_2)_pO-$ mit p = 2 oder 4 bedeutet

X ist bevorzugt eine chemische Bindung ein $C_1$-$C_3$-Alkylenrest, O, S, $SO_2$, besonders bevorzugt $-CH_2$, $-C(CH_3)_2$- oder $SO_2$.

Beispiele für die erfindungsgemäß einzusetzenden Bisphenol-Gruppen sind:

Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone und
$\alpha,\alpha$-Bis-(hydroxyphenyl)-diisopropylbenzole.

Erfindungsgemäß einzusetzende Vertreter der genannten Gruppen von Bisphenolen sind:

4,4'-Dihydroxydiphenyl, gegebenenfalls im Gemisch mit
2,4'-Dihydroxydiphenyl
4,4'-Dihydroxy-3,3',5,5'-tetramethyldiphenyl
4,4'-Dihydroxy-3,3'-dimethyldiphenyl
Bis-(4-hydroxyphenyl)-methan
Bis-(4-hydroxy-3,5-dimethylphenyl)-methan
Bis-(4-hydroxyphenyl)-ethan
2,2-Bis-(4-hydroxyphenyl)propan ("Bisphenol A")
1,1-Bis-(4-hydroxyphenyl)-cyclohexan
1,1-Bis-(4-hydroxy-3,5-dimethylphenyl)-cyclohexan
Bis-(4-hydroxphenyl)-sulfon
Bis-(4-hydroxyphenyl)-sulfid
Bis-(4-hydroxy-3,5-dimethylphenyl)-sulfid
Bis-(4-hydroxy-3,5-dimethylphenyl)-sulfon
Bis-(4-hydroxyphenyl)-oxid
Bis-(4-hydroxy-3,5-dimethylphenyl)-oxid
Bis-(4-hydroxyphenyl)-keton
Bis-(4-hydroxy-3,5-dimethylphenyl)-keton

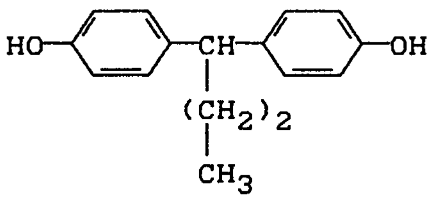

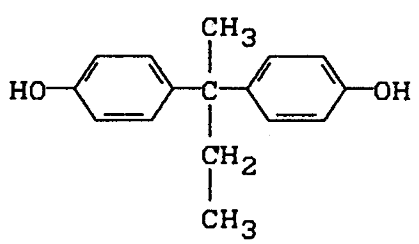

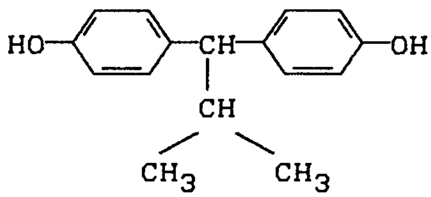

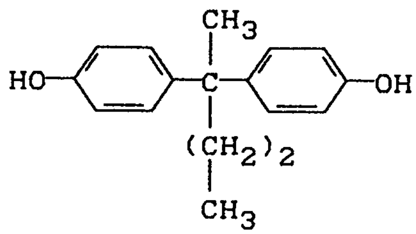

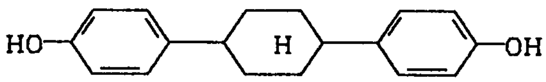

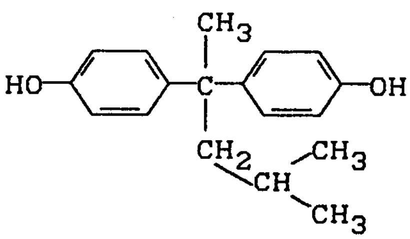

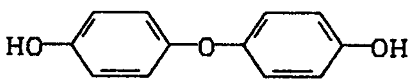

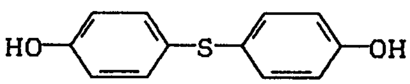

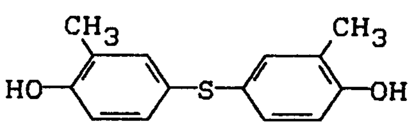

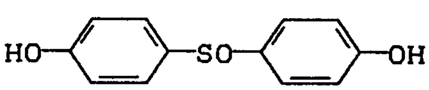

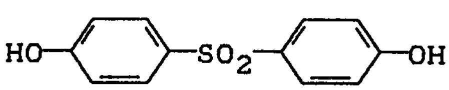

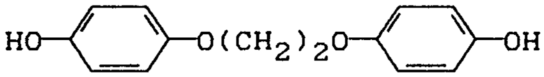

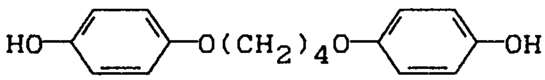

Besonders geeignete Bisphenole sind:
Bis-(4-hydroxyphenyl)-methan
Bis-(4-hydroxy-3,5-dimethylphenyl)-methan
2,2-Bis-(4-hydroxyphenyl)-propan
2,2-Bis-(4-hydroxy-3,5-dimethylphenyl)-propan
2,2-Bis-(4-hydroxy-3,5'-diethylphenyl)-propan
1,1-Bis-(4-hydroxyphenyl)-cyclohexan
Bis-(4-hydroxyphenyl)-sulfon
Bis-(4-hydroxy-3,5-dimethylphenyl)-sulfon
Bis-(4-hydroxphenyl)-sulfid.

Die genannten Bisphenole können allein oder in Gemischen eingesetzt werden.

Ganz besonders bevorzugt sind
Bis-(4-hydroxyphenyl)-methan und
Bis-(4-hydroxyphenyl)-propan.

Die letztgenannten Produkte können auch in ihrer Rohqualität, d.h. verunreinigt mit den entsprechenden 2,4-Isomeren sowie mit kleinen Mengen Bisphenolen mit Indan-Struktur, Chromanstruktur und auch den homologen Dreikerntrisphenolen eingesetzt werden.

Der Einsatz von Phenolen zur Verbesserung spezieller Eigenschaften von Polyamiden ist zwar seit langem bekannt,

So werden sterisch gehinderte Phenole, d.h. in mindestens einer, vorzugsweise in allen o-Stellungen zur phenolischen OH-Gruppe mit $\geqq$ $C_3$ Gruppen (z.B. mit t-Butyl, Cyclohexyl) substituierte Phenole als Wärmestabilisatoren in Polyamiden verwendet.

Diese Produkte zeigen jedoch wegen ihrer sterischen Hinderungen und wegen des hohen Anteils aliphatischer C-Atome in den Phenolmolekülen in höheren Konzentrationen Verträglichkeitsprobleme (Ausschwitzen!) und sind zudem recht kostspielig.

In der DOS 1 769 662 wurden spezielle Phenole eingesetzt, die zu einer verbesserten Deformationsbeständigkeit von Fasern, Borsten und Garnen führen, wobei die Phenole mit weniger als 4 Benzolringen ebenfalls zwingend in einer oder beiden o-Stellungen zu den phenolischen OH-Gruppen sekundäre oder tertiäre Alkylgruppen, d.h. sterisch anspruchsvolle Gruppen, tragen müssen.

Auch diese Polyphenole sind im Sinne der Erfindung wenig brauchbar.

Die DOS 1 912 111 beschreibt weichgemachte Polyamide, die als Weichmacherkomponenten Gemische aus Estern langkettiger Carbonsäuren und phenolischen Verbindungen enthalten.

In dieser wie in den vorgenannten anderen Schriften findet sich kein Hinweis auf durch Legierung schlagzäh eingestellte Polyamide.

In der DOS 3 248 329 wird die Verwendung von Monophenolen zur Verminderung der Wasseraufnahme von teilkristallinen Polyamiden empfohlen.

Die dort genannten Monophenole neigen bei höheren Konzentrationen zum Ausschwitzen und zu Belagbildung, vermutlich auch wegen des geringen Gehaltes phenolischer Gruppen in den Monophenolen.

In der GB-A 1 203 283 werden Polyamidzusammensetzungen, insbesondere zur Verspinnung von Fasern, beschrieben, welche Phenole bestimmter Zusammensetzung in Mengen von 2 - 10 OH-Äquivalenten pro 100 Amid-Äquivalenten enthalten, beschrieben, Die Phenole unterscheiden sich von den beanspruchten Phenolen.

Die erfindungsgemäß einzusetzenden Bisphenole werden in die schlagzäh-modifizierten Formmassen auf Basis von Polyamiden, vorzugsweise zu 5-35 Gew,-%, besonders bevorzugt zu 10-30 Gew.-%, bezogen auf den Polyamidanteil eingesetzt.

Als Polyamide können lineare Polykondensate aus Diaminen und Dicarbonsäuren wie 6,6-, 6,7-, 6,8-, 6,9-, 6,10-, 6,12-, 8,8-, 12,12-Polyamid aus Aminosäuren bzw. den entsprechenden Lactamen mit mindestens 5 C-Atomen, wie z.B. $\epsilon$-Caprolactam, Laurinlactam oder Polykondensate aus aromatischen Dicarbonsäure wie Isophthalsäure, Terephthalsäure mit Diaminen wie Hexamethylendiaminen, Octamethylendiamin, aus araliphatischen Ausgangsstoffen wie m- oder p-Xylylendiaminen und Adipinsäure, Korksäure, Sebazinsäure, Polykondensate auf Basis von alicyclischen Ausgangsstoffen wie Cyclohexandicarbonsäure, Cyclohexandiessigsäure, Diamino-dicyclohexylmethanen, Isophorondiamin verwendet werden.

Vorzugsweise werden teilkristalline Polyamide verwendet, besonders bevorzugt PA-6 und PA-6,6, insbesondere mit relativen Viskositäten (gemessen in 1 % Lösung in m-Kresol bei 25 ° C) von 1,6-2,5 bei amorphen sowie von 2,5-5,0, bevorzugt von 2,7-4,5, bei den teilkristallinen Polyamiden.

Die schlagzäh-modifizierende Komponente ist mit 5-60 Gew.-%, vorzugsweise 10-40 Gew.-%, besonders bevorzugt 12-30 Gew.-%, bezogen auf den PA-Anteil, in den erfindungsgemäßen Formmassen enthalten.

Besonders wirksam im Sinne einer stark verbesserten Fließfähigkeit und damit erleichterter Verarbeitung sind die erfindungsgemäß einzusetzenden Bisphenole in Legierungen aus den genannten Polyamiden, besonders bevorzugt, teilkristallinen Polyamiden, und bekannten Dien- und/oder Acrylatkautschuke, die vorzugsweise Anteile an polaren Gruppen eingebaut enthalten, wie

- Butadien-Polymeren, die auch mit Comonomeren wie z.B. Acrylnitril, (Meth)Acrylsäure und/oder (Meth)Acryl säureestern copolymerisiert oder in eine Kern/Mantel-Struktur gepfropft sein können.

Solche zur Erhöhung der Zähigkeit von Polyamiden geeigneten Polymeren sind seit langem bekannt und beispielsweise in DE-PS 2 444 584 (= US-PS 4 022 748), DE-OS 2 726 256 (= US-PS 4 096 202) genannt.

Geeignete Mengenverhältnisse in den erfindungsgemäßen Formmassen sind z.B.
55 - 85 Gew.-% Polyamid
10 - 30 Gew.-% der Kautschukkomponente
5 - 15 Gew.-% Bisphenole,
wobei die Summe der Komponenten immer 100 Gew.-% ergeben soll.

Zur Herstellung der erfindungsgemäßen Produkte zur Fertigung von schlagzäh eingestellten Formmassen auf Polyamidbasis können die Polyamidkomponente, die Kautschukkomponente und die Bisphenolkomponente oberhalb des Schmelzpunktes des Polyamids miteinander vermischt werden. Dies kann z.B. unmittelbar nach der Herstellung des Polyamids durch Zumischen des Bisphenol-Modifikators zu der als Strang abzuspinnenden Schmelze erfolgen, wobei die Legierung mit den Kautschukkomponenten dann nachträglich erfolgt. Vorzugsweise werden die erfindungsgemäß modifizierten Polyamide jedoch durch Mischen aller Ausgangskomponenten, d.h. des Polyamids, der schlagzäh machenden Polymerpartner und der Bisphenol-Komponente, in üblichen Schneckenmaschinen hergestellt.

Analog kann bei der zusätzlichen Einarbeitung von anderen Additiven, wie z.B. Farbstoffen oder Entformungshilfsmitteln, verfahren werden.

Die Bisphenolkomponente kann daher mit der Polyamid-Komponente schon gemeinsam in den Einfüllstutzen des Extruders eindosiert oder zu einem späteren Zeitpunkt während der Extrusion den zu extrudierenden Massen zugesetzt werden.

Zur Compoundierung eignen sich übliche bekannte Apparaturen. Doppelschneckenextruder werden bevorzugt eingesetzt.

Die erfindungsgemäßen, gut fließfähigen, schlagzäh eingestellten Polyamidformmassen zeichnen sich bei sonst im wesentilchen konstantem Eigenschaftsbild gegenüber vergleichbaren Formmassen, die keine Bisphenole enthalten, durch stark verbesserte Fließfähigkeit und bessere Verarbeitbarkeit sowie störungsfreie Oberflächen, weniger Fließnahtabbildungen (bei großen Formteilen aus Werkzeugen mit mehreren Angüssen) aus. In Einzelfällen ist zusätzlich sogar eine Verbesserung der Stabilität gegen den Einfluß von Feuchtigkeit, anorganischen Salzen, Hitze und UV-Licht ("Wetterstabilität") zu erzielen.

Die neuen Formmassen eignen sich besonders zur Herstellung von Formkörpern nach dem Spritzgießverfahren, insbesondere für großflächige und komplizierte Formteile, die sonst nur mit hohem technischem Aufwand bei der Verarbeitung mit Oberflächenstörungen oder oft gar nicht herstellbar sind.

Vorzugsweise eignen sich die Produkte für Anwendungen im Automobilbau (Stoßfänger, Spoiler, Karosserieteile).

## Beispiel 1

70 Gew.-Teile eines Polyamid-6 mit einer relativen Viskosität von 2,9, 30 Gew.-Teile eines Elastomers I (Pfropfpolymerisat aus 80 % Pfropfgrundlage aus vernetztem Polybutadien - Gelgehalt > 70 %, gemessen in Toluol - und 20 % Pfropfauflage aus Methylmethacrylat) und 10 Gew.-Teile Bisphenol A werden getrennt, aber gleichzeitig, in einen Zweiwellenextruder vom Typ ZSK 32 eindosiert und bei 90 Upm und 260 ° C extrudiert.

Die Arbeitsaufnahme im Extruder unter den genannten Bedingungen betrug 23 A, ohne den Zusatz von Bisphenol 38 A.

Die Produktschmelze wurde als Strang in ein Wasserbad ausgetragen, granuliert und bis zu einem Wassergehalt von < 0,05 Gew.-% getrocknet.

Gemessene Produkteigenschaften sind in Tabelle 1 aufgeführt.

(Anmerkung: Bei den Vergleichsprodukten wurden zu den Gewichtsteilen Polyamid zusätzlich die bei der Bisphenolkomponente genannten Mengen als Polyamid eingesetzt).

Beispiele 2-10

Beispiel 1 wurde wiederholt mit dem Unterschied, daß die aus Tabelle 1 ersichtlichen Einzelkomponenten zur Herstellung eingesetzt wurden.

Eigenschaften der hergestellten Produkte sind in Tabelle 1 mitaufgeführt (Vergleichswerte ohne Bisphenol-Zusatz in Klammern).

T a b e l l e  1

| Bsp. | PA-Komponente Typ ($\eta_{rel}$) | Gew.-Tle. | Elastomer-Komponente Typ | Elastomer-Komponente Gew.-Tle. | Bisphenol Gew.-Tle. | Arbeitsaufn. im Extruder [A] | Fließl.* cm | E-Modul $E_b$ (MPa) |
|---|---|---|---|---|---|---|---|---|
| 1 | PA 6 (2,9) | 60 | I | 30 | 10 Bisphenol A | 23 (38) | 44 (28) | 1750 (1550) |
| 2 | " | 50 | I | 30 | 20 " | 12 (38) | 83 (28) | 1640 (1550) |
| 3 | " (3,5) | 50 | I | 30 | 20 " | 22 (64) | 58 (17) | 1670 (1600) |
| 4 | PA 66 (3,9) | 60 | I | 20 | 20 " | 14 (70) | 59 (20) | 2350 (2000) |
| 5 | PA 6 (3,5) | 70 | II | 20 | 10 " | n.b. | 68 (45) | 2180 (2000) |
| 6 | PA 66 (2,9) | 65 | I | 30 | 5 2,2',6,6'-Tetramethyl-bisphenol A | 30 (42) | 40 (30) | 1780 (1670) |
| 7 | PA 6 (2,9) | 60 | I | 30 | 10 " | 20 (38) | 44 (28) | 1760 (1550) |
| 8 | PA 6 (2,9) | 65 | I | 30 | 5 Bisphenol A | 24 (42) | 37 (28) | 1600 (1550) |
| 9 | PA 6 (2,9) | 70 | I | 20 | 10 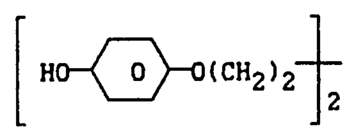 | 25 (36) | 55 (38) | 1820 (1740) |
| 10 | PA 6 (3,5) | 70 | III | 20 | 10 wie Bsp. 1 | n.b. | 72 (47) | 2310 (2100) |

Elastomer II: vernetzter Acrylatkautschuk auf Basis einer Kern-Mantel-Struktur aus einem Kern auf Basis von vernetztem Polybutadien und zwei verschiedenen Mantelstrukturen (gemäß Pfropfprodukt K der EP 00 83 446.

Elastomer III: vernetzter Acrylatkautschuk mit Kern-Mantel-Struktur und Methylmethacrylat in der Pfropfhülle (Acrylatkautschuk KM 330 der Fa. Röhm + Haas)

---

* Die Fließlänge ist ein Maß für die Fließfähigkeit eines Produktes und damit für seine Verarbeitbarkeit; höhere Fließlänge bedeutet bessere Fließfähigkeit und damit kürzere Spritzcyclen.

Die Fließlänge wurde wie folgt bestimmt: In ein spezielles Werkzeug, das auf 90$^0$ gehalten wird, wird mittels einer Spritzgießmaschine, deren Zylindertemperatur 260$^0$C beträgt, die zu untersuchende Probe mit einem Spritzdruck von 72 bar eingespritzt. Besonders leichtfließende Werkstoffe sind in der Lage, unter diesen Bedingugnen das Werkzeug zu füllen, so daß man nachher eine 100 cm lange Spirale entnehmen kann. Weniger fließfähige Werkstoffe füllen unter den beschriebenen Bedingungen das Werkzeug nur teilweise;

dann können infolge der vorzeitigen Erstarrung der Schmelze nur Spiralkörper von < 100 cm Länge erhalten werden.
Als Fließlänge wird die Länge in cm angegeben, die 5mal reproduziert wurde.

## Patentansprüche

1. Thermoplastisch verarbeitbare Polyamid-Formmassen, enthaltend Dien- und/oder Acrylatkautschuke, dadurch gekennzeichnet, daß die Formmassen 3-35 Gew.-% bezogen auf den Polyamidanteil, Bisphenole der Formeln 2,2-Bis-(4-hydroxyphenyl)propan ("Bisphenol A"),

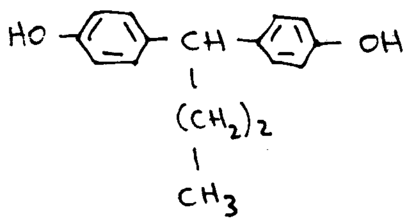 ,
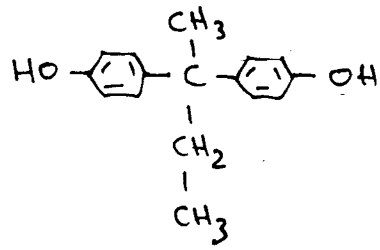 ,

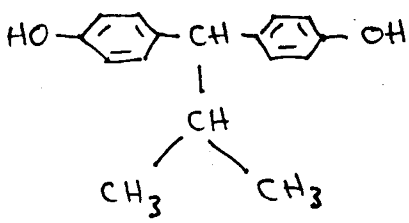 ,
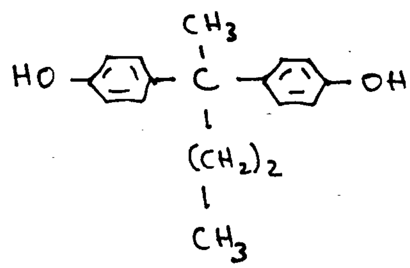 ,

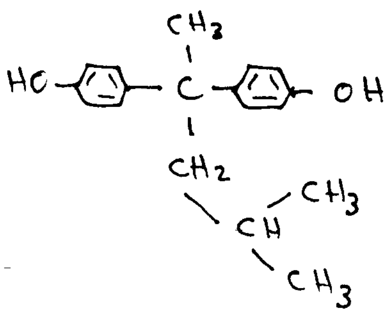 , oder

der Formel I

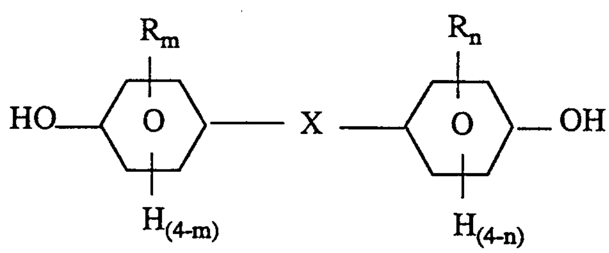

enthalten, wobei

R für eine $CH_3$-, $C_2H_5$-Gruppe steht, mit der Maßgabe, daß die Summe der aliphatischen C-Atome aller an die Phenolringe gebundenen Reste R < 6, ist.

m und n unabhängig voneinander ganze Zahlen von 0-4, und

X eine chemische Bindung, einen $C_1$-$C_3$-Alkylen-, oder $C_5$-$C_6$-Cycloalkylenrest, O, S, SO, $SO_2$, CO oder O-$(CH_2)_p$-O- mit p = 2 oder 4 bedeutet

und die Formmassen 10-40 Gew.-%, bezogen auf den Polyamid-Anteil, eines Dien-und/oder Acrylat-Kautschuks enthalten.

2. Thermoplastisch verarbeitbare Formmassen nach Anspruch 1, dadurch gekennzeichnet, daß als Polyamide teilkristalline Polyamide eingesetzt werden.

3. Thermoplastisch verarbeitbare Formmassen nach Ansprüchen 1 oder 2, dadurch gekennzeichnet, daß die Formmassen 12-30 Gew.-%, bezogen auf den Polyamid-Anteil, eines Dien-und/oder Acrylatkautschuks enthalten.

4. Thermoplastisch verarbeitbare Formmassen nach Ansprüchen 1-3, dadurch gekennzeichnet, daß Bisphenole eingesetzt werden, bei denen R eine Methylgruppe darstellt, m und n, unabhängig voneinander 0, 1 oder 2 sind und in denen X eine chemische Bindung, ein $C_1$-$C_3$-Alkylenradikal, O, S oder $SO_2$ ist.

5. Thermoplastisch verarbeitbare Formmassen nach Ansprüchen 1-4, dadurch gekennzeichnet, daß Bisphenole eingesetzt werden, bei denen X, $-CH_2-$, $-C(CH_3)_2-$ oder $-SO_2-$ ist.

6. Thermoplastisch verarbeitbare Formmassen nach den Ansprüchen 1-5, dadurch gekennzeichnet, daß Bisphenole eingesetzt werden, bei denen m und n beide Null sind.

7. Thermoplastisch verarbeitbare Formmassen nach Ansprüchen 1-6, dadurch gekennzeichnet, daß als Bisphenole Bisphenol A eingesetzt wird.

8. Formkörper mit -gegenüber Bisphenolfreien Formmassen- erhöhtem E-Modul aus thermoplastisch verarbeitbaren Formmassen nach den Ansprüchen 1-7.

**Claims**

1. Thermoplastically processible polyamide moulding compounds containing diene and/or acrylate rubbers, characterised in that the moulding compounds contain from 3-35% by weight, based on the polyamide component, of bisphenols of the formulae 2,2-bis-(4-hydroxyphenyl)-propane ("Bisphenol A"),

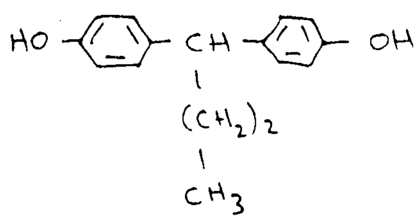 ,

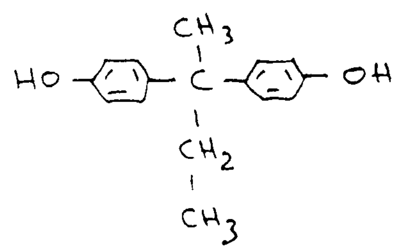 ,

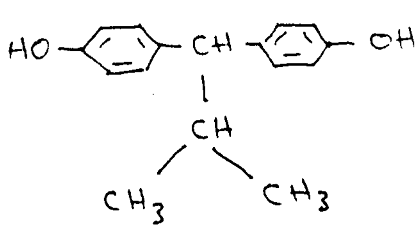 ,

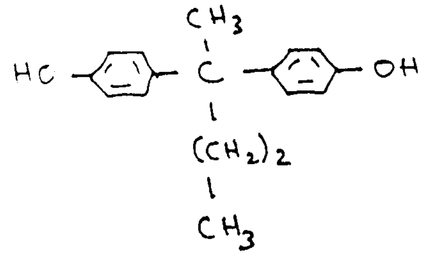 ,

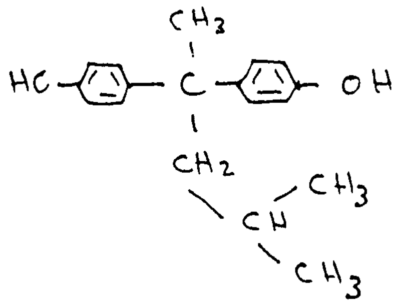

or of the formula I

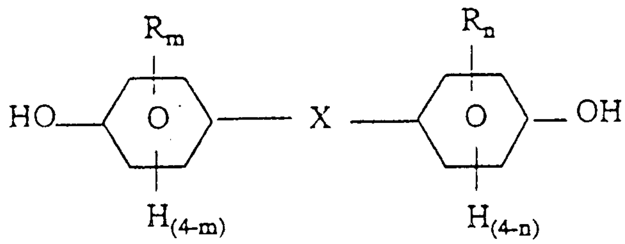

wherein

R denotes a $CH_3$ or $C_2H_5$ group under the condition that the sum of aliphatic carbon atoms of all the groups R attached to the phenol rings is less than 6,

m and n represent integers of from 0-4, independently of one another, and

X denotes a chemical bond, a $C_1$-$C_3$-alkylene or $C_5$-$C_6$-cycloalkylene group, O, S, SO, $SO_2$, CO or O-$(CH_2)_p$-O wherein $p = 2$ or 4

and the moulding compounds contain from 10-40% by weight, based on the polyamide component, of a diene and/or acrylate rubber.

**2.** Thermoplastically processible moulding compounds according to Claim 1, characterised in that the polyamides used are partially crystalline polyamides.

**3.** Thermoplastically processible moulding compounds according to Claim 1 or 2, characterised in that the moulding compounds contain from 12-30% by weight, based on the polyamide component, of a diene and/or acrylate rubber.

**4.** Thermoplastically processible moulding compounds according to Claims 1-3, characterised in that in the bisphenols used, R is a methyl group, m and n have the values 0, 1 or 2, independently of one another, and X is a chemical bond, a $C_1$-$C_3$-alkylene radical, O, S or $SO_2$.

**5.** Thermoplastically processible moulding compounds according to Claims 1-4, characterised in that in the bisphenols used, X stands for $CH_2$, $C(CH_3)_2$ or $SO_2$.

**6.** Thermoplastically processible moulding compounds according to Claims 1-5, characterised in that m and n in the bisphenols used both have the value zero.

**7.** Thermoplastically processible moulding compounds according to Claims 1-6, characterised in that the bisphenols used are bisphenol A.

**8.** Moulded products of thermoplastically processible moulding compounds according to Claims 1-7 having a higher E-modulus than moulding compounds which are free from bisphenol.

## Revendications

**1.** Compositions à mouler à base de polyamides, susceptibles de mise en oeuvre thermoplastique, contenant des caoutchoucs diéniques et/ou des caoutchoucs d'acrylate, caractérisées en ce qu'elles contiennent 3 à 35 % en poids, par rapport à la proportion de polyamides, de bisphénols des formules du 2,2-bis-(4-hydroxyphényl) propane ("bisphénol A"),

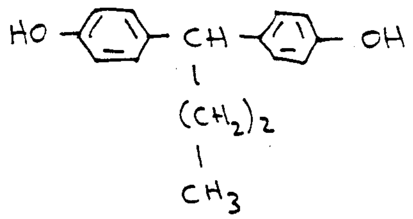 ,

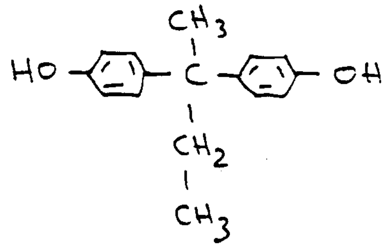 ,

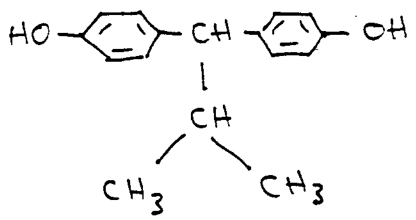 ,

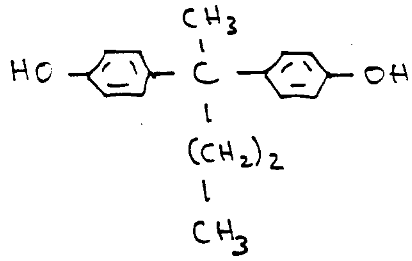 ,

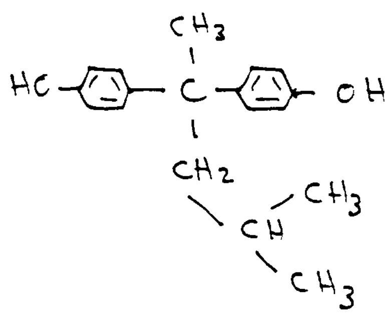 , ou

de formule I

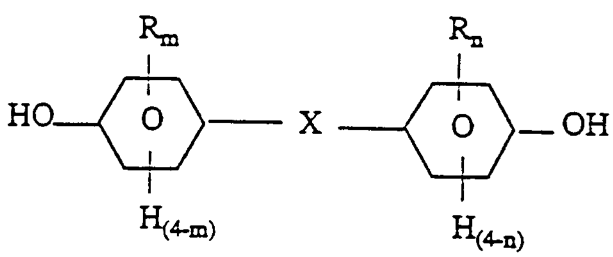

où

- R représente un groupe $CH_3$-, $C_2H_5$-, sous réserve que la somme des atomes aliphatiques de carbone de tous les restes R liés aux noyaux phénoliques, soit inférieure à 6,
- m et n représentent indépendamment l'un de l'autre des nombres entiers de 0 à 4, et
- X est une liaison chimique, un reste alkylène en $C_1$ à $C_3$ ou cycloalkylène en $C_5$ ou $C_6$, O, S, SO, $SO_2$, CO ou un groupe O-$(CH_2)_p$-O- avec p = 2 ou 4

et les compositions à mouler contiennent 10 à 40 % en poids, par rapport à la proportion de polyamide, d'un caoutchouc diénique et/ou d'un caoutchouc d'acrylate.

2. Compositions à mouler susceptibles de mise en oeuvre thermoplastique suivant la revendication 1, caractérisées en ce qu'on utilise comme polyamides des polyamides partiellement cristallins.

3. Compositions à mouler susceptibles de mise en oeuvre thermoplastique suivant les revendications 1 ou

2, caractérisées en ce qu'elles contiennent 12 à 30 % en poids, par rapport à la proportion de polyamide, d'un caoutchouc diénique et/ou d'un caoutchouc d'acrylate.

**4.** Compositions à mouler susceptibles de mise en oeuvre thermoplastique suivant les revendications 1 à 3, caractérisées en ce qu'on utilise des bisphénols dans lesquels R représente un groupe méthyle, m et n, indépendamment l'un de l'autre, représentent les nombres 0, 1 ou 2 et X est une liaison chimique, un radical alkylène en $C_1$ à $C_3$, O, S ou $SO_2$.

**5.** Compositions à mouler susceptibles de mise en oeuvre thermoplastique suivant les revendications 1 à 4, caractérisées en ce qu'on utilise des bisphénols dans lesquels X représente $-CH_2-$, $-C(CH_3)_2-$ ou $-SO_2-$.

**6.** Compositions à mouler susceptibles de mise en oeuvre thermoplastique suivant les revendications 1 à 5, caractérisées en ce qu'on utilise des bisphénols dans lesquels m et n sont tous deux égaux à zéro.

**7.** Compositions à mouler susceptibles de mise en oeuvre thermoplastique suivant les revendications 1 à 6, caractérisées en ce qu'on utilise comme bisphénols le bisphénol A.

**8.** Pièces moulées ayant - par rapport à des compositions à mouler ne contenant pas de bisphénols - un module d'élasticité élevé, produites à partir de compositions à mouler susceptibles de mise en oeuvre thermoplastique suivant les revendications 1 à 7.